**Europäisches Patentamt**

**European Patent Office**

**Office européen des brevets**

(19)

(11) Numéro de publication: **0 056 562**
**B1**

(12)

# FASCICULE DE BREVET EUROPEEN

(45) Date de publication du fascicule du brevet:
**04.09.85**

(51) Int. Cl.⁴: **G 21 C 3/16**

(21) Numéro de dépôt: **81810434.1**

(22) Date de dépôt: **30.10.81**

(54) **Organe de retenue du combustible dans un élément combustible.**

(30) Priorité: **20.01.81 CH 348/81**

(43) Date de publication de la demande:
**28.07.82 Bulletin 82/30**

(45) Mention de la délivrance du brevet:
**04.09.85 Bulletin 85/36**

(84) Etats contractants désignés:
**BE CH DE FR GB IT LI**

(56) Documents cités:
**FR - A - 1 289 111**
**FR - A - 1 565 786**
**FR - A - 2 012 583**
**US - A - 3 197 381**
**US - A - 3 953 288**
**US - A - 4 036 691**

(73) Titulaire: **Gesellschaft zur Förderung der Industrieorientierten Forschung an den Schweizerischen Hochschulen und weiteren Institutionen, Wildhainweg 21, CH-3012 Bern (CH)**

(72) Inventeur: **Stratton, Richard W., Pestalozzistrasse 1, CH-5200 Windisch (CH)**
Inventeur: **Nicolet, Michel, Erlenweg 1, CH-5400 Baden (CH)**
Inventeur: **Andrews, Glenn, Av. des Communes Réunies, 54, CH-1212 Grand-Lancy (CH)**

(74) Mandataire: **Dousse, Blasco et al, 7, route de Drize, CH-1227 Carouge/Genève (CH)**

**Description**

La présente invention se rapporte à une gaine tubulaire de crayon de combustible pour réacteur nucléaire comportant au moins un élément de retenue du combustible nucléaire sous forme de particules.

Les développements les plus récents dans le domaine des combustibles nucléaires ont porté sur des matériaux en particules sous la forme de micro-sphères ou de poudre ou enfin de pastilles frittées d'oxyde, de carbure, de nitrure d'(U, Pu) ou encore renfermant d'autres actinides que l'uranium et le plutonium. Ce matériau en particules frittées ou non est contenu dans des tubes en un alliage métallique du type de ceux généralement utilisés pour la fabrication de gaines de combustible nucléaire, de 1 à 3 mètres de longueur et de 6 à 14 mm de diamètre, remplis jusqu'à un certain niveau, l'espace restant étant destiné à recevoir le gaz libéré durant la fission du combustible. La portion du tube dans laquelle est contenu le combustible est fermée par un organe de retenue microporeux disposé à ses deux extrémités. Cet organe doit être en un matériau qui est compatible avec le combustible ainsi qu'avec l'alliage métallique du tube. Il est préférable que ce matériau soit réfractaire et non réactif. Cet organe doit être capable de glisser dans le tube tout en garantissant une fermeture complète de la portion de ce tube contenant le combustible et doit être poreux pour permettre au gaz de diffuser axialement à travers l'organe de retenue microporeux aussi bien durant le remplissage de la gaine que pour permettre aux produits de fission gazeux de s'échapper dans l'espace destiné à les recueillir. Cette porosité doit toutefois être inférieure à la grosseur des plus fines particules qui est de l'ordre de 20 à 30 µ pour empêcher toute fuite de combustible de la portion du tube dans laquelle il est contenu et ceci aussi bien durant le transport, la manutention que durant le remplissage au cours duquel le tube est soumis à des vibrations de 20 à 100 Hz.

Il a déjà été proposé, dans le US-A-3 953 288 un disque pour évacuer le gaz non pas d'une gaine de combustible, mais d'un conteneur de matériau radioactif émettant dans l'alpha. Les particules alpha émises peuvent se charger d'électrons pour devenir des molécules d'hélium. Afin d'éviter une élévation indésirable de la pression dans le conteneur, on le ferme à l'aide d'un disque microporeux qui peut être obtenu par enroulement en spirale d'un ruban et diffusion métallurgique contrôlée entre les spires résultant de la liaison de ces spires les unes aux autres, la dimension des porosités dépendant des paramètres de liaison et de l'état de surface du ruban avant al liaison. L'inconvénient d'un tel disque est de perdre son élasticité par la liaison de ses spires et de ne pas pouvoir s'adapter aux dilatations d'un élément tubulaire, différentes de celles de ce disque, comme ceci se produit dans le cas d'une gaine tubulaire de crayon de combustible.

Le but de la présente invention est précisément de remédier à un tel inconvénient.

A cet effet, la présente invention a pour objet une gaine tubulaire de crayon de combustible pour réacteur nucléaire selon la revendication 1.

Le dessin annexé illustre schématiquement et à titre d'exemple une forme d'exécution et une variante de la gaine tubulaire objet de l'invention ainsi qu'un mode de mise en œuvre du procédé de fabrication de cette gaine.

La fig. 1 est une vue partielle en perspective avec arrachement de cette gaine.

La fig. 2 est une vue en coupe transversale de la gaine au niveau de l'un des organes de retenue.

Les figs 3a à 3c illustrent différentes phases du procédé de fabrication d'un organe de retenue.

La fig. 4 est un diagramme illustrant l'influence du rapport entre l'écartement des passages et leur longueur sur la porosité de l'organe de retenue.

La fig. 5 est une vue en coupe axiale, illustrant une variante de la forme d'exécution de la fig. 1.

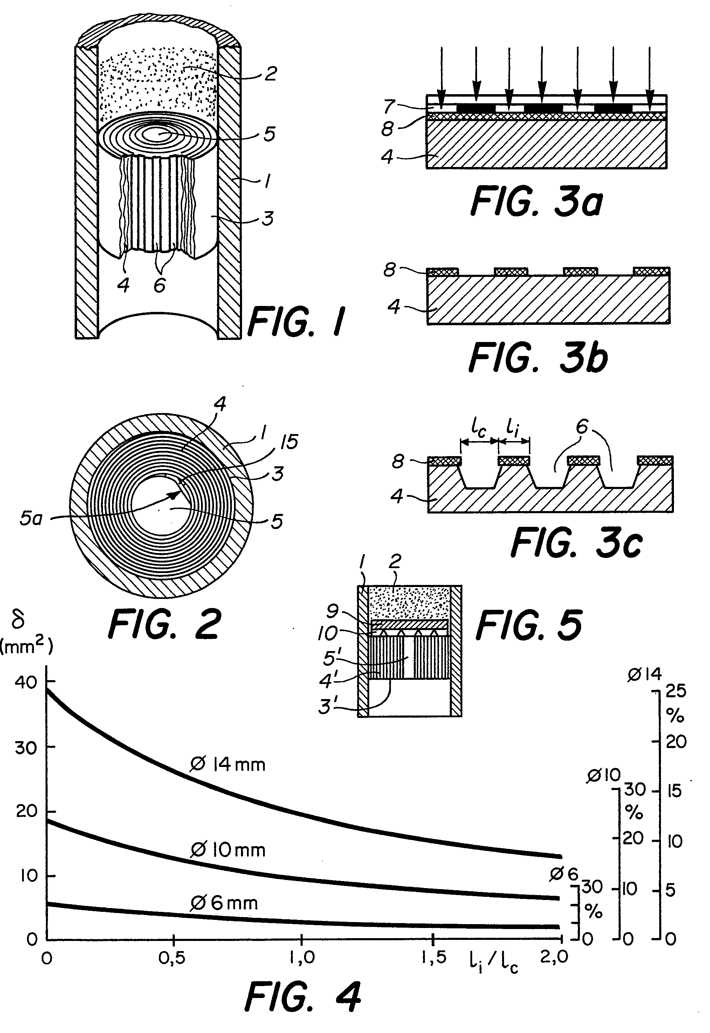

La gaine tubulaire illustrée par la fig. 1 comporte un tube en acier inoxydable 1 qui peut avoir entre 1 et 3 mètres de longueur et un diamètre compris entre 6 et 14 mm. Ce tube 1 présente une portion contenant du combustible nucléaire 2 sous la forme de micro-sphères ou de poudre frittée ou non d'oxyde, de carbure ou de nitrure d' (U, Pu). Ce combustible 2 est retenu dans cette portion du tube par deux organes de retenue 3 dont l'un est visible sur la fig. 1, constitués par un ruban métallique 4 enroulé en spirale autour d'une cheville centrale 5 pourvue d'un replat 5a. Une des faces du ruban 4 présente des passages 6 s'étendant transversalement au ruban 4 et donc parallèlement à l'axe du tube 1 lorsque ce ruban y a été chassé après avoir été enroulé en spirale autour de la cheville centrale 5 (fig 2). Il est évident que la profondeur des canaux 6 dans le ruban et donc leur dimension radiale une fois ce ruban enroulé en spirale ne doit pas dépasser la grosseur des plus petites particules du combustible 2, pour éviter toute déperdition de ce combustible en toute circonstance.

Comme on l'a déjà mentionné précédemment, le matériau utilisé pour réaliser le ruban doit encore remplir plusieurs autres conditions, susceptibles d'être satisfaites, notamment par le molybdène ainsi que par le tungstène, comme on le verra plus en détail par la suite.

Etant donné que les conditions d'utilisation du combustible impliquent un gradient de temératures compris entre 600° et 1200 °C, le molybdène et le tungstène devraient pouvoir être utilisés compte tenu de leur propriétés physiques comparées à celles de l'acier (voir tableau I).

Il ressort de ce tableau que ces matériaux présentent de bonnes propriétés de résistance aux températures élevées. En ce qui concerne le diamètre efficace d'absorption des neutrons, le molybdène est compatible avec l'acier inoxydable, tandis que le tungstène a une valeur très élevée correspondant à celle d'un bon matériau de protection.

Tableau I

| Matière | Module de young E(GPa) | | Résistence à la flexion (MPa) | Résistance à la traction (MPa) | | | Densité |
|---|---|---|---|---|---|---|---|
| | T.A | 800°C | | T.A | 600°C | 1200°C | (g.cm$^{-3}$) |
| Molybdène | 3.24 | 2.76 | 600 | 800 | 700 | 400 | 10.2 |
| Tungstène | 4.07 | – | – | 1470 | 530 | 400 | 19.3 |
| Acier inox | 1.90 | 1.24 | 250 | 640 | 340 | – | 7.9 |

| Matière | Conductivité thermique cal/sec/cm² 1 cm/°C 500–1200°C | Coefficient de dilatation linéaire par °C | Diamètre efficace d'absorption de neutrons (thermique) (barns) | Coefficient de friction (statique) (avec acier inox) |
|---|---|---|---|---|
| Molybdène | 0.275–0.239 | $6.28 \times 10^{-6}$ | 2–3 | 0.6 |
| Tungstène | 0.288–0.268 | $4.45 \times 10^{-6}$ | 19 | 0.6 |
| Acier inox | 0.039 | $12.3 \times 10^{-6}$ | 2–3 | – |

Compte tenu de l'écart entre le coefficient linéaire de dilatation de l'acier et de ceux du molybdène d'une part et du tungstène d'autre part, il est utile de calculer sur un exemple pratique si cet écart est compatible ou non avec la dilatation du tube d'acier inoxydable 1. La dilatation de l'organe de retenue peut être calculée en admettant une température moyenne de 900 °C entre 600 °C et 1200 °C, représentant le gradient de température entre le gaz produit au cours de la fission et la paroi du tube refroidi, à l'aide de l'équation suivante:

$$\frac{r_1}{r_2} = \frac{1 + a' \, T_1}{1 \times a' \, T_2}$$

où:

$r_1$ est le rayon initial

$r_2$ est le rayon après dilatation

$a'$ est le coefficient de dilatation linéaire

$T_1$ est la température ambiante

$T_2$ est la température de travail

Pour un tube de 6 mm de diamètre intérieur, l'organe de retenue en molybdène aura la dilatation suivante:

$$r_2 = 3 \, \frac{1 + 6.28 \times 10^{-6} \, (900)}{1 + 6.28 \times 10^{-6} \, (20)} = 3{,}0166 \text{ mm}$$

Pour un organe de retenue en tungstène, le même calcul donne un rayon après dilatation de 3,0117 mm.

Quant au tube, sa dilatation peut être calculée en se référant à sa circonférence interne donnée par $2\pi r$. En utilisant de nouveau la même équation et en admettant une température de paroi de 600 °C, la valeur du rayon du tube après dilatation est

$$r_2 = 3 \, \frac{1 + 12{,}3 \times 10^{-6} \, (600)}{1 + 12{,}3 \times 10^{-6} \, (20)} = 3{,}0214 \text{ mm}$$

La différence de dilatation entre le tube 1 et les organes de retenue 3 en molybdène est de 0,5 centième de mm et de 1 centième de mm pour le tungstène. Cette différence reste dans une limite permettant sa compensation par une dilatation élastique des spires de l'organe de retenue 3.

La porosité de l'organe de retenue 3 doit être du même ordre de grandeur que celle du combustible en particules qui se situe entre 11 et 23%. Or, comme on l'a mentionné précédemment, la dimension radiale des pores ménagés entre les spires adjacentes ne doit pas excéder 20 microns compte tenu de la grosseur des plus fines particules du combustible. Par conséquent, plus le ruban enroulé en spirale est mince plus la porosité peut être grande. Théoriquement cette porosité peut être égale à 20 microns multiplié par la longueur du ruban formant la spirale. Toutefois le maintien d'un écartement constant entre les spires du ruban ne peut pas être réalisé. C'est la raison pour laquelle il est proposé selon l'invention de ménager des passages 6 transversalement au ruban 4 par une technique de photo-gravure. Le diagramme de la fig. 4 illustre trois courbes montrant la variation de surface S en mm² des canaux en fonction du rapport de longueur $l_i/l_c$ des portions non gravées et des portions gravées, pour des organes de retenue 3 de, respectivement, 6, 10 et 14 mm de diamètre et une épaisseur de ruban de 0,076 mm, correspondant à un ruban de molybdène disponible sur le marché. Sur la partie droite de ce diagramme on a tracé trois échelles illustrant les % de porosité relatifs à ces organes de retenue de respectivement 6, 10 et 14 mm de diamètre. On constate que le % de porosité pour un rapport $l_i/l_c$ de 1 correspond dans les trois cas à l'ordre de grandeur de la porosité du combustible lui-même qui est comprise entre 11 et 23%.

La technique de photo-gravure utilisée pour réaliser les passages transversaux 6 sur l'une des faces du ruban 4 est bien connue. Elle consiste à réaliser un dessin à échelle agrandie de l'image désirée ou d'une portion de celle-ci lorsque cette image est composée d'un motif se répétant plusieurs fois. Ensuite on réduit ce dessin à la dimension désirée et on produit un film photographique 7 (fig. 3) de cette image ramenée à son échelle réelle. Ce film 7 constitue un stencil ou un masque que l'on pose sur le ruban 4 dont la face adjacente au film 7 a été préalablement enduite d'une couche 8 de résine photosensible. Cette résine peut être à action positive ou négative, dans le premier cas, la surface exposée reste après développement et dans le second cas c'est l'inverse. La sensibilisation de la plupart des résines est obtenue à l'aide d'une source de lumière ultraviolette, mais on peut choisir des résines sensibles à d'autres longuers d'ondes. L'exposition de la résine à une longueur d'onde appropriée provoque la polymérisation de la résine. Après développement de cette couche 8, la surface non protégée du ruban 4 peut être attaquée dans la solution de gravage chimique dont la concentration et la température permettent de contrôler la profondeur du gravage. Dans le cas du molybdène, la solution utilisée pour l'attaque chimique est constituée par une part en volume d'acide nitrique concentré, une part en volume d'acide sulfurique concentré et trois parts en volume d'eau. Pour le tungstène la solution est de l'acide fluoridrique utilisé avec un procédé électrochimique.

L'enlèvement de la résine ayant servi d'épargne durant le processus de gravage chimique peut ensuite être obtenue à l'aide d'un solvant adapté au type de résine utilisé, après quoi le ruban sera soigneusement lavé pour enlever toute trace des produits chimiques utilisés.

Une fois le ruban gravé, il faut souder une de ses extrémités à la cheville centrale 5 par soudage par point. Bien que l'on puisse obtenir une soudure entre un ruban de molybdène et la cheville centrale 5 en molybdène ou en tungstène, il est préférable d'interposer entre cette cheville et le ruban une feuille 15 de tantale de 0,10 mm d'épaisseur. Les meilleurs résultats de soudage sont obtenus avec une feuille intermédiaire de nickel, mais la température de fonctionnement maximum de 1200 °C est trop proche du point de fusion du nickel qui se situe à 1453 °C. Un risque grave peut en outre provenir de la formation de composés intermétalliques cassant entre le nickel et le molybdène ou le tungstène. Il est possible d'envisager une soudure par fusion du molybdène ou du tungstène à l'aide d'un canon à électrons.

L'enroulement du ruban 4 sur la cheville 5 peut être obtenu avec des moyens simples comprenant un moteur pour entraîner la cheville 5 en rotation et un poids attaché à l'extrémité libre du ruban 4 pour tendre le ruban et obtenir un enroulement à spires jointives. La vitesse de rotation est choisie relativement lente pour éviter qu'un démarrage brusque ne casse la soudure. Le poids fixé au ruban est de 2 kg et est fixé au moyen d'un fil et d'une pince spéciale qui maintient le plan du ruban horizontal. Pour guider le ruban et l'empêcher de former un enroulement conique par décalage des bords, le fil reliant le poids au ruban est guidé par une poulie à gorge, règlable axialement.

Une fois l'enroulement réalisé, il est placé dans un mandrin de serrage formé de deux mâchoires semicirculaires correspondant au diamètre de l'organe de retenue 3 désiré. Ces mâchoires sont serrées autour de l'organe de retenue 3 pendant que le ruban 4 est encore sous tension et que quelques centimètres de ruban restent à enrouler. L'enroulement est encore poursuivi jusqu'à la limite du possible et la pince de fixation du poids est enlevée de sorte que le reste du ruban peut finir d'être enroulé dans le mandrin. Pour éviter qu'un espace supérieur à 20 microns subsiste entre le tube et l'organe de retenue 3, l'épaisseur de l'extrémité extérieur du ruban 4 est formée de manière à décroître progressivement.

L'organe de retenue est ensuite poussé vers l'extrémité du mandrin à l'aide d'un poussoir tubulaire dont le diamètre extérieur est légèrement inférieur à celui du mandrin et dont le diamètre intérieur est légèrement supérieur à celui de la cheville centrale 5. La partie externe des mâchoires du mandrin de serrage est conique pour faciliter son positionnement coaxial et adjacent à l'une des extrémités du tube 1 en vue du transfert de l'organe de retenue 3 dans ce tube, réalisé au moyen d'un poussoir similaire à celui utilisé précédemment pour amener l'organe de retenue à l'extrémité du mandrin.

Etant donné les difficultés rencontrées pour travailler le molybdène ou le tungstène, il est possible à titre de variante de réaliser un organe de retenue 3′ (fig. 5) constitué par un ruban 4′ en acier inoxydable enroulé autour d'une cheville centrale 5′, un disque de molybdène ou de tungstène 9 étant alors interposé entre le combustible 2 et l'organe de retenue 3′. Ce disque 9 a pour fonction de former une barrière thermique destinée à réduire le gradient de température entre le combustible nucléaire et l'organe de retenue 3′ afin d'éviter des points chauds et de permettre ainsi l'utilisation d'acier inoxydable. Un réseau de canaux 10 est de préférence gravé sur la face du disque 9 adjacente à l'organe de retenue 3′. En variante ce disque peut également être obtenu par frittage afin de lui conférer une porosité adéquate au passage du gaz vers les canaux de l'organe de retenue 3′. Un tel disque fritté ou non aura une épaisseur de quelques dizièmes de mm et, notamment si il n'est pas fritté et par conséquent poreux, il aura un diamètre de quelques centièmes de mm inférieur au diamètre intérieur de la gaine 1, afin de permettre au gaz résultant de la fission de s'écouler annulairement vers l'organe de retenue 3′, le réseau de canaux 10 du disque 9 permettant au gaz d'accéder aux canaux 6 de cet organe de retenue 3′.

## Revendications

1. Gaine tubulaire de crayon de combustible pour réacteur nucléaire comportant au mois un élément de retenue du combustible nucléaire sous forme de particules (2), caractérisée par le fait que ledit élément de retenue (3) est réalisé autour d'une cheville centrale (5), par enroulement d'un ruban métallique (4) en spirale à spires jointives libres de glisser les unes contre les autres, retenues élastiquement dans ladite gaine (1), et par formation de passages micro-poreux (6) entre ces spires, au moins une des dimensions de la section transversale de ces passages étant plus petite que la dimension des particules les plus fines du combustible, l'épaisseur de la portion dudit ruban (3) adjacente à l'extrémité extérieure de la spirale étant décroissante.

2. Gaine tubulaire selon la revendication 1, caractérisée par le fait qu'un disque (9) de molybdène ou de tungstène est interposé entre la face interne de l'élément de retenue (3) et le combustible.

3. Gaine tubulaire selon la revendication 1, caractérisée par le fait que lesdits passages (6) sont formés par des rainures transversales ménagées sur l'une des faces du ruban (4).

4. Gaine tubulaire selon la revendication 1, caractérisée par le fait que ladite cheville (5) présente un plat (5a) ménagé selon une corde et sur lequel l'extrémité intérieure du ruban (4) est soudée.

5. Gaine tubulaire selon la revendication 1, caractérisée par le fait que ledit ruban (4) est en molybdène.

6. Gaine tubulaire selon la revendication 1, caractérisée par le fait que ledit ruban (4) est en tungstène.

7. Gaine tubulaire selon la revendication 2, caractérisée par le fait que ledit disque (9) est poreux et est réalisé en matériau fritté.

8. Gaine tubulaire selon la revendication 2, caractérisée par le fait que ledit disque présente un diamètre de quelques centièmes de mm inférieur au diamètre intérieur de la gaine (1) et que sa face adjacente à l'élément de retenue (3) présente un réseau rainuré (10).

9. Gaine tubulaire selon l'une des revendications 2, 7 et 8, caractérisée par le fait que ledit élément de retenue (3) est en acier inoxydable.

## Claims

1. Tubular sheath of a fuel rod for an atomic reactor comporting at least one element for retaining the nuclear fuel in the form of particles (2), characterized in that said retaining element (3) is provided around a central pin (5) about which a metallic strip is spirally wound in connected turns but free to slip against each other, elastically retained in said sheath (1) and by providing microporous passages (6) between said turns, at least one of the crosssectional dimensions of these passages being smaller than the size of the finest fuel particles, the thickness of the portion of said strip (3) adjacent to the outside end of the spiral tapering off.

1. Tubular sheath according to claim 1, characterized in that a molybdenum or tungsten disk (9) is interposed between the internal face of the retaining element (3) and the fuel.

3. Tubular sheath according to claim 1, characterized in that said passages (6) are formed by transverse grooves provided on one of the faces of the strip.

4. Tubular sheath according to claim 1, characterized in that said pin (5) has a flat section (5a) provided along a chord to which the internal end of the strip (4) is welded.

5. Tubular sheath according to claim 1, characterized in that said strip (4) is made of molybdenum.

6. Tubular sheath according to claim 1, characterized in that said strip (4) is made of tungstene.

7. Tubular sheath according to claim 2, characterized in that said disk is porous and made of a sintered material.

8. Tubular sheath according to claim 2, characterized in that said disk has a diameter of some 100 ths of a mm less than the internal diameter of the sheath (1) and that the disk face adjacent to the retaining element (3) has a network of grooves (10).

9. Tubular sheath according to any of claims 2, 7 and 8, characterized in that said retaining element (3) is of stainless steel.

## Patentansprüche

1. Schutzrohr eines Brennstoffstifts für einen Kernreaktor mit mindestens einem Element zur Zurückhaltung des Kernbrennstoffs in Teilchenform (2), dadurch gekennzeichnet, dass das Zurückhaltungselement (3) um einen Mittelstift (5) durch spiralförmiges Einrollen eines Metallbandes (4) in aneinanderliegenden Windungen hergestellt ist, die frei gegeneinander gleiten können und die federnd in dem Schutzrohr (1) zurückgehalten werden, sowie durch Bildung mikroporöser Durchgänge (6) zwischen diesen Windungen, wobei mindestens eine der Querschnittdimensionen dieser Durchgänge kleiner ist als die Dimension der kleinsten Brennstoffteilchen, und wobei die Dicke des Abschnitts des Bandes (3) nahe dem äusseren Ende der Spirale sich vermindert.

2. Schutzrohr nach Anspruch 1, dadurch gekennzeichnet, dass eine Scheibe (9) aus Molybdän oder Wolfram zwischen der Innenfläche des Zurückhaltungselements (3) und dem Brennstoff eingefügt ist.

3. Schutzrohr nach Anspruch 1, dadurch gekennzeichnet, dass die Durchgänge (6) aus Querrillen gebildet sind, die auf einer der Seiten des Bandes (4) eingebracht sind.

4. Schutzrohr nach Anspruch 1, dadurch gekennzeichnet, dass der Stift (5) eine gemäss einer Kreissehne angebrachte Abflachung (5a) aufweist, auf der das innere Ende des Bandes (4) verschweisst ist.

5. Schutzrohr nach Anspruch 1, dadurch gekennzeichnet, dass das Band (4) aus Molybdän ist.

6. Schutzrohr nach Anspruch 1, dadurch gekennzeichnet, dass das Band aus Wolfram ist.

7. Schutzrohr nach Anspruch 2, dadurch gekennzeichnet, dass die Scheibe (9) porös ist und aus gefrittetem Material besteht.

8. Schutzrohr nach Anspruch 2, dadurch gekennzeichnet, dass die Scheibe einen Durchmesser hat, der um einige Hundertstel Millimeter kleiner ist als der Innendurchmesser des Schutzrohrs (1), und dass ihre dem Zurückhaltungselement (3) benachbarte Seite ein gerilltes Netz (10) bildet.

9. Schutzrohr nach einem der Ansprüche 2, 7 und 8, dadurch gekennzeichnet, dass das Zurückhaltungselement (3) aus nicht rostendem Stahl besteht.

FIG. 1

FIG. 2

FIG. 3a

FIG. 3b

FIG. 3c

FIG. 5

FIG. 4